# EUROPEAN PATENT SPECIFICATION

(11) **EP 0 939 481 B1**
(45) Date of publication and mention of the grant of the patent: **27.10.1999**
(21) Application number: 98830081.0
(22) Date of filing: 19.02.1998
(51) Int. Cl.: H02K 9/28

(54) **An air cooling device for electric motors provided with a collector**
Luftkühlungsanordnung für mit einem Kollektor ausgerüstete elektrische Motoren
Dispositif de refroidissement à air pour moteurs électriques comportant un collecteur

(43) Date of publication of application: 01.09.1999
(73) Proprietor: Cardi S.R.L., 24030 Pontida (Bergamo) (IT)
(72) Inventor: Dell'Oro, Edoardo, 22050 Garlate (Lecco) (IT); Cattaneo, Ezio, 24030 Caprino Bergamasco (Bergamo) (IT)
(74) Representative: Sutto, Luca

(56) References cited:
- EP-A- 0 412 645
- GB-A- 2 275 829
- US-A- 4 092 556
- PATENT ABSTRACTS OF JAPAN vol. 6, no. 243 (E-145), 2 February 1982 & JP 57 142154 A (FUJI DEKI SEIKO), 2 September 1982,

## Description

The present invention relates to an air cooling device for electric motors provided wiht a collector, said device being of the type comprising at least one fan integral with the shaft of a motor to effect an air flow and slots for the intake and exhaust of the air flow, slots associated with an outer casing of the motor and able to orient said flow along the motor itself.

As is well known, in electric motors in general, and in particular in asynchronous alternating current electric motors provided with a commutator, for instance used for hand-held electrical appliances such as drills and grinding machines, the nominal or rated power indicates the power that the motor can absorb under the prescribed operating conditions without being subjected to overheating, which may compromise its proper operation.

In order to avoid overheating and maintain temperature within the prescribed limits, corresponding to the absorption of the nominal power, each motor is generally fitted with an open-loop air cooling device comprising a fan driven directly by the shaft of the motor itself to obtain a forced circulation of air, i.e. a flow of air between intake slots and exhaust slots obtained in appropriate positions in the outer casing of the motor.

Such an embodiment is shown by the document US 4 092 556.

The prior art described above allows in practice to create an air flow with prevalently axial direction which invests homogeneously the different components of the motor, be they rotating or fixed, in order to guarantee that the prescribed temperature is held when the absorbed electric power, and hence the output electric power, does not exceed the nominal value.

As the required nominal power grows, it is necessary to increase the dispersion surfaces of the motor, the flows of cooling air, and correspondingly the weights and dimensions of the motor itself, with obvious drawbacks especially for those applications wherein compactness and limited weight are essential factors for the ease and handiness of use of the electrical tool.

JP 57 142154 and EP 0 412 645 show an electric motor comprising a double fan which is at the same time a divider disc for dividing the inside space of the motor in two chambers. A first chamber contains the stator-rotor assembly, and the second chamber contains the commutator. The double fan achieves two differents air flows respectively dedicated for the cooling of the stator-rotor assembly and for the cooling of the commutator. The double fan draws the airflows along the stator rotor assembly and along the commutator, and expells the air flows through lateral outlets provided on the outer casing of the motor. However, an embodiment as one shown by JP 57 142154 and EP 0 412 645 provides an electric motor having a complicated and cumbersome structure.

In this situation, the technical task whereon the present invention is based is to conceive an air cooling device for electric motors provided with a commutator, able to overcome the aforementioned limitations, i.e. able to improve the cooling effectiveness and consequently to allow the absorption and output of greater powers for the same weight and size of the motor.

The technical task specified is essentially attained by an air cooling device that is characterised in that it comprises the features defined in the characterising portion of claim 1.

The description of a preferred, but not exclusive, embodiment of an air cooling device for electric motors provided with a commutator according to the invention is provided below, purely by way of indicative and non-limiting example, and illustrated in the accompanying drawings wherein:

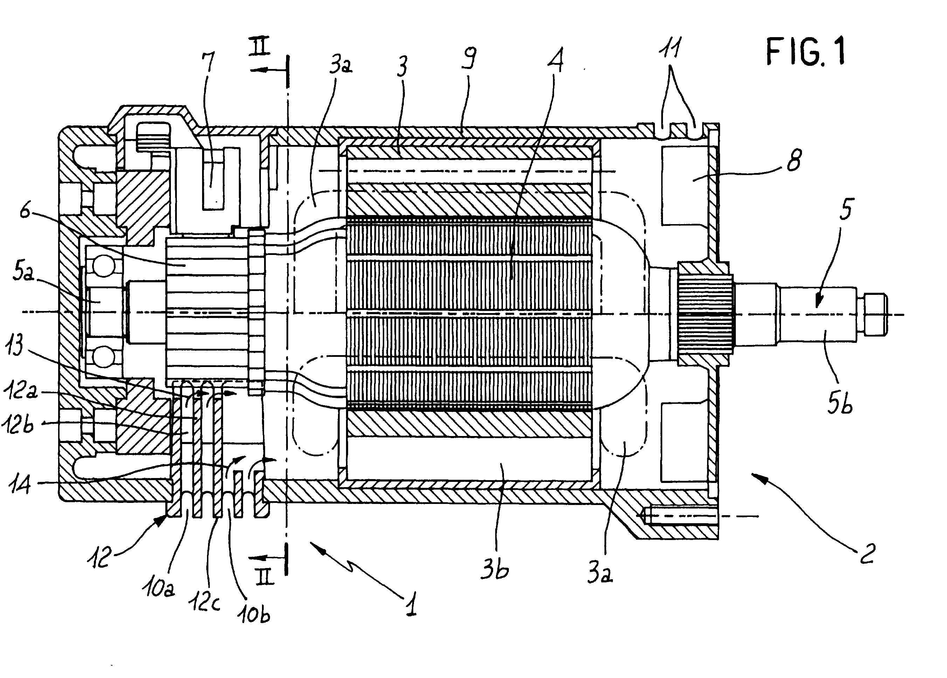

- Figure 1 shows a broken longitudinal section, obtained according to the trace I-I in Figure 2, of a motor provided with the cooling device according to the invention;
- Figure 2 shows a section according to the plane II-II in Figure 1;
- Figure 3 shows in perspective view an insert that is part of the subject device.

With reference to the aforementioned figures, the open-loop air cooling device according to the invention is indicated in its entirety with the number 1.

It is used for a conventional electric motor 2, comprising in particular a stator 3, fitted with stator coils 3a, and a rotor 4 splined onto a shaft 5 and fitted at a first end 5a thereof with a commutator 6.

On the commutator 6 slide in diametrically opposite positions a pair of sliding contacts or brushes 7 for supplying power to the rotor coils.

In proximity to a second end 5b of the shaft 5 opposite to the first end 5a the cooling device 1 comprises a fan 8 splined onto the shaft 5 itself and able to effect an air flow within an outer casing 9 that encompasses the stator 3 and the commutator 6. On the casing 9 are obtained, in proximity to the commutator 6, intake slots or openings 10 and in proximity of the fan 8 slots or openings 11 for expelling the flow of air moved by the fan 8 itself. The position of such slots, which are located essentially in terminal areas of the casing 9, orients the air flow along the rotating and static organs of the motor 2 in such a way as to remove the heat that is developed therein due to the passage of electrical current and to friction.

Originally the air cooling device 1 comprises, in proximity to the commutator 6, at least one element 12 for deviating at least a portion of the air flow effected by the fan 8, in such a way as to define an auxiliary air flow 13 directed against the outer surface of the commutator 6 itself.

More in detail, two deviation elements 12 are provided, able to form a pair of auxiliary air flows 13 set in diametrically opposite positions with respect to the commutator 6. Preferably the deviating elements 12 are located in the circumferential areas around the commutator 6, not occupied by the individual brushes 7, i.e. set therebetween.

Each deviating element 12 comprises at least one baffle 12a developing between one of the intake slots 10 and an area next to the outer surface of the commutator 6, preferably at a distance not exceeding 10 mm therefrom.

More specifically, each deviating element 12 is to comprise a plurality of baffles 12a, able to define as a whole one or more air conveying channels 12b developing radially with respect to the commutator 6 and each positioned in continuation of one of the intake slots 10.

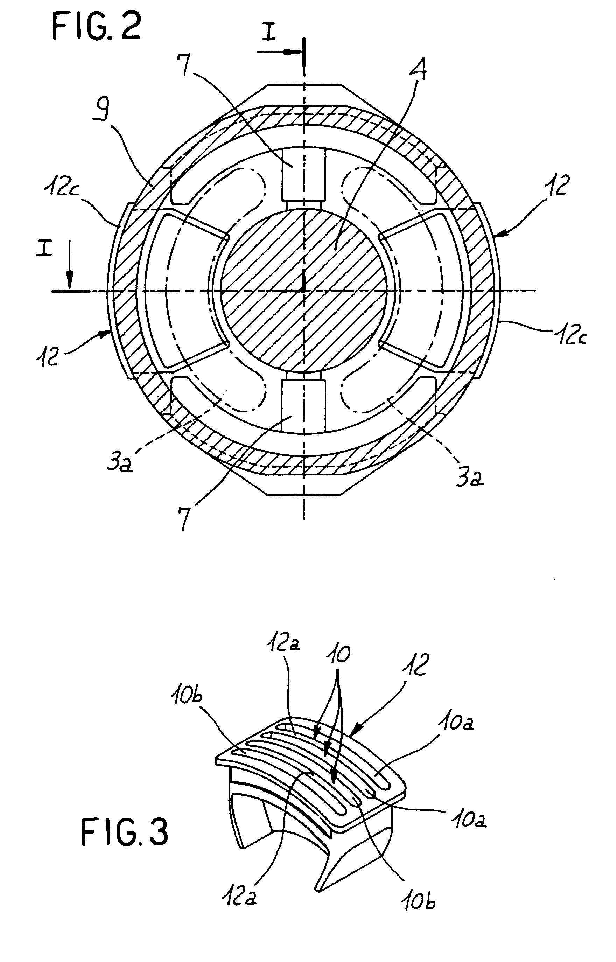

As Figure 2 shows, each conveying channel 12b of each deviating element 12 presents preferably in a plane transverse to the rotor 4 of the motor 2, a conformation essentially as an annulus sector converging towards the commutator 6. The presence of the separation baffles 12a allows to identify, among the slots 10, first slots 10a, dedicated to the flow of auxiliary air 13, and second slots 10b dedicated to a second portion 14 of all the air flow produced by the fan 8, destined to invest the stator 3 and the rotor 4.

It was found that to optimise the effectiveness of the overall cooling of the motor 2 the areas of the passage section of the first slots 10a and of the second slots 10b can be essentially equivalent.

Also to optimise cooling, in particular of the stator 3, at least the second slots 10b are located in proximity to a circumferential area of the motor occupied by the stator coils 3a so that the second part 14 of the air flow drawn in through the slots 10b can invest the stator coils directly.

More specifically, the second slots 10b are located exclusively in alignment with cooling channels 15 conventionally defined between the containment body 9 and the stator 3, by means of longitudinal recesses set on the outer surface thereof, in the areas corresponding to the median longitudinal axes of the respective stator coils 3a.

Each deviating element 12 can advantageously be integrated in an insert, for instance made of moulded plastic material, presenting a base portion 12c fitted both with the first intake slots 10a and with the second slots 10b.

The base portion 12c in practice defines an area of the outer casing 9, in that the entire element 12 can easily be inserted in an opening set therein, after its separate fabrication as a distinct insert.

The invention attains important advantages.

It has been noted that the auxiliary air flows 13 allow to enhance the effectiveness of the cooling obtained by the circulation of air due to the fan 8 especially in correspondence with the commutator 6, which the applicant has found to be the most critical area, i.e. the one most subject to large temperature increases, particularly with reference to motors designed to operate at high speed, where the sliding and sparking of the contacts as they slide on the rotor are particularly evident.

In practice it was unexpectedly found that the auxiliary air flow directed against the commutator of the electric motor allows the latter to absorb, maintaining perfect operativeness, larger electrical currents than those corresponding to the nominal power guaranteed for the motor itself by the cooling loops of the prior art. In practice, the nominal power of the motor can be increased even by more than 15%.

It should also be noted that, thanks to the present invention, every electric motor provided with a commutator already existing on the market can quickly and easily be upgraded with simple modifications to its cooling device by means of the deviating elements 12 to a motor able to output larger powers than those originally envisioned.

It is stressed that the additional elments for deviating the flow of cooling air are of limited cost and allow to avoid the use, for the same power, of larger, heavier and more expensive motors.

It is also stressed that the use of the subject device allows to improve cooling efficiency also in those applications wherein, to limit size and to weaken the instrumental parts of the outer casing positioned behind the commutator, the air intake slots are necessarily obtained laterally on the outer casing of the motor, in a position essentially alongside the commutator.

## Claims

1. Air cooling device for electric motors provided with a commutator, of the type comprising at least one fan (8) integral with the shaft (5) of a motor (2) to effect a flow of air and slots for intaking (10) and expelling (11) the flow of air associated to an outer casing (9) of the rotor (2) and able to orient said flow along the motor itself, characterised in that it comprises at least one element (12) for deviating at least a first portion of said air flow effected by the fan (8) to define an auxiliary air flow (13) directed against the outer surface of said commutator (6), said deviating element being engaged to said outer casing and comprising at least one baffle (12a) developing between at least one first intake slot (10a) dedicated to said auxiliary air flow (13), and an area next to the outer surface of said commutator (6).

2. Device according to claim 1, characterised in that said deviating element (12) comprises a plurality of baffles (12a) able together to define at least one air conveying channel (12b) developing radially with respect to said commutator (6) and positioned in continuation of at least one said intake slot (10a).

3. Device according to claim 1, characterised in that it comprises at least two of said deviating elements (12) able to form a pair of said auxiliary air flows (13) in diametrically opposite positions with respect to said commutator (6) and positioned in circumferential areas around the commutator itself (6) set between a pair of brushes (7) sliding thereon.

4. Device according to claim 2, characterised in that said deviating element (12) comprises a base portion (12c) fitted with first intake slots (10a) dedicated to said auxiliary air flow (13) and with second intake slots (10b) dedicated to a second part (14) of the air flow effected by the fan, destined to invest the stator (3) and the rotor (4) of the motor (2).

5. Device according to claim 1, characterised in that to said outer casing are further associated second intake slots (10b) exclusively arranged in essential alignment with median longitudinal axes of respective stator coils (3a).

6. Device according to claim 4, characterised in that said first intake slots (10a) and said second slots (10b) present essentially equivalent areas of the air passage sections.

7. Device according to claim 2, characterised in that each air conveying channel (12b) presents a shape, in a plane transverse to the shaft (5) of the motor (2), essentially as an annulus sector converging towards said commutator (6) and it is fitted externally with an inlet mouth coinciding with one of said intake slots (10).

8. Device according to claim 1, characterised in that said deviating element (12) comprises at least one insert engaged in an opening counter-shaped thereto set in said outer casing (9).

## Patentansprüche

1. Luftkühlungsgerät für mit einem Kollektor versehene Elektromotoren, nach der Art umfassend mindestens ein an der Welle (5) eines Motors (2) festliegendes Lüfterrad (8) zur Erzeugung eines Luftstromes und Saug - und Ausstoßschlitze (10 bzw. 11) des Luftstromes, die einem Außengehäuse (9) des Motors (2) zugeordnet sind und den Luftstrom längs des Motors selbst ausrichten, dadurch gekennzeichnet, daß es mindestens ein Ablenkelement (12) mindestens eines Teils des durch das Lüfterrad (8) erzeugten Luftstromes umfaßt, um einen Hilfsluftstrom (13) festzulegen, der gegen die Außenfläche des Kollektors (6) gerichtet ist, wobei das Ablenkelement am Außengehause in Eingriff steht und mindestens eine Scheidewand (12a) umfaßt, die sich zwischen mindestens einem ersten, dem Hilfsluftstrom (13) gewidmeten Saugschlitz (10a) und einem nahe der Außenfläche des Kollektors (6) liegenden Bereich erstreckt.

2. Gerät nach Anspruch 1, dadurch gekennzeichnet, daß das Umlenkelement (12) eine Vielzahl von Scheidewänden (12a) umfaßt, die insgesamt mindestens einen Luftleitkanal (12b) festlegen, der sich radial zum Kollektor (6) erstreckt und in Weiterführung mindestens eines ersten Saugschlitzes (10a) angeordnet ist.

3. Gerät nach Anspruch 1, dadurch gekennzeichnet, daß es mindestens zwei Ablenkelemente (12) umfaßt, die ein Paar von Hifsluftströmen (13) in Stellungen bilden, die gegenüber dem Kollektor (6) diametral abgewandt und in Umfangsbereichen um den Kollektor (6) selbst herum angeordnet sind, die zwischen einem auf demselben schleifenden Bürstenpaar (7) angeordnet sind.

4. Gerät nach Anspruch 2, dadurch gekennzeichnet, daß das Umlenkelement (12) einen Basisabschnitt (12c) aufweist, der mit ersten dem Hilfsluftstrom (13) gewidmeten Saugschlitzen (10a) und mit zweiten Saugschlitzen (10b) versehen ist, die einem zweiten Teil (14) des durch das Lüfterrad erzeugten Luftstromes gewidmet ist, der dazu bestimmt ist, den Ständer (3) und den Läufer (4) des Motors (2) zu umfließen.

5. Gerät gemäß Anspruch 1, dadurch gekennzeichnet, daß dem Außengehäuse überdies zweite Saugschlitze (10b) zugeordnet sind, die ausschließlich in wesentlicher Ausrichtung mit den Längsmittelachsen der jeweiligen Ständerwicklungen (3a) angeordnet sind.

6. Gerät nach Anspruch 4, dadurch gekennzeichnet, daß die ersten Saugschlitze (10a) und die zweiten Saugschlitze (10b) im wesentlichen äquivalente Flächen der Luftdurchtrittsquerschnitte aufweisen.

7. Gerät nach Anspruch 2, dadurch gekennzeichnet, daß jeder Luftleitkanal (12b) in einer zur Welle (5) des Motors (2) queren Ebene eine Ausbildung aufweist, die im wesentlichen in der Form eines Kreiskranzsektors in Richtung des Kollektors (6) zusammenläuft und außen mit einer Einmündung versehen ist, die mit einem der Saugschlitze (10) zusammenfällt.

8. Gerät nach Anspruch 1, dadurch gekennzeichnet, daß das Umlenkelement (12) mindestens einen Einsatz umfaßt, der in einer zu ihm gegenprofilierten Öffnung eingreift, die im Außengehäuse (9) bereit gestellt ist.

## Revendications

1. Dispositif de refroidissement à air pour moteurs électriques comportant un collecteur, du type comprenant au moins un ventilateur (8) solidaire de l'arbre (5) du moteur (2) pour réaliser un écoulement d'air et des fentes d'aspiration (10) et expulsion (11) de l'écoulement d'air associées à une enveloppe extérieure (9) du moteur (2) et destinées à orienter ledit écoulement le long du moteur lui-même, caractérisé en ce qu'il comporte au moins un élément (12) de déviation d'au moins une portion dudit écoulement d'air réalisé par le ventilateur (8) en vue de définir un écoulement d'air auxiliaire (13) dirigé contre la surface extérieure dudit collecteur (6), ledit élément de déviation étant engagé à ladite enveloppe extérieure et comprenant au moins une chicane (12a) se développant entre au moins une première fente d'aspiration (10a) dédiée audit écoulement d'air auxiliaire (13), et une zone proche de la surface extérieure dudit collecteur (6).

2. Dispositif selon la revendication 1, caractérisé en ce que ledit élément de déviation (12) comporte une pluralité de chicanes (12a) destinées à définir ensemble au moins un canal de transport de l'air (12b) s'étendant en sens radial par rapport audit collecteur (6) et positionné dans le prolongement d'au moins l'une desdites fentes d'aspiration (10a).

3. Dispositif selon la revendication 1, caractérisé en ce qu'il comporte au moins deux desdits éléments de déviation (12) en mesure de former deux desdits écoulements auxiliaires d'air (13) en positions diamétralement opposées par rapport audit collecteur (6) et placés dans des zones circonférentielles autour du collecteur (6) lui-même, arrangées entre une paire de balais (7) frottant sur ce dernier.

4. Dispositif selon la revendication 2, caractérisé en ce que ledit élément de déviation (12) comporte une portion de base (12c) munie de premières fentes d'aspiration (10a) dédiées audit écoulement d'air auxiliaire (13) et de deuxièmes fentes d'aspiration (10b) dédiées à une deuxième portion (14) de l'écoulement d'air réalisé par le ventilateur, destinée à frapper le stator (3) et le rotor (4) du moteur (2).

5. Dispositif selon la revendication 1, caractérisé en ce que des deuxièmes fentes d'aspiration sont en outre associées à ladite enveloppe extérieure (10b), ménagées exclusivement en alignement essentiel avec les axes médians longitudinaux d'enroulements de stator respectifs (3a).

6. Dispositif selon la revendication 4, caractérisé en ce que lesdites premières fentes d'aspiration (10a) et lesdites deuxièmes fentes (10b) présentent des aires des sections de passage de l'air sensiblement équivalentes.

7. Dispositif selon la revendication 2, caractérisé en ce que chaque canal de transport de l'air (12b) présente une conformation, dans un plan transversal à l'arbre (5) du moteur (2), essentiellement en forme de secteur de couronne circulaire convergeant vers ledit collecteur (6) et est muni à son extérieur d'une bouche d'entrée coïncidant avec l'une desdites fentes d'aspiration (10).

8. Dispositif selon la revendication 1, caractérisé en ce que ledit élément de déviation (12) comporte au moins une pièce insérée engagée dans une ouverture épousant la forme de cette pièce insérée, ménagée dans ladite enveloppe extérieure (9).
